# EUROPÄISCHE PATENTSCHRIFT

(11) **EP 3 604 104 B1**
(45) Veröffentlichungstag und Bekanntmachung des Hinweises auf die Patenterteilung: **07.04.2021**
(21) Anmeldenummer: 19174025.7
(22) Anmeldetag: 13.05.2019
(51) Int. Cl.: B62M 6/50

(54) **REGELVERFAHREN ZUR ANPASSUNG EINES FAHRVERHALTENS EINES ELEKTROFAHRRADS BEIM SCHIEBEN DES ELEKTROFAHRRADS, STEUERGERÄT UND ELEKTROFAHRRAD**
ELECTRIC BICYCLE, CONTROLLER AND METHOD FOR ADJUSTING DRIVING BEHAVIOUR OF AN ELECTRIC BICYCLE WHEN BEING PUSHED
PROCÉDÉ DE RÉGLAGE PERMETTANT D'AJUSTER UN COMPORTEMENT DE CONDUITE D'UNE BICYCLETTE ÉLECTRIQUE LORS DU DÉPLACEMENT DE LA BICYCLETTE ÉLECTRIQUE, APPAREIL DE COMMANDE ET BICYCLETTE ÉLECTRIQUE

(30) Priorität: 30.07.2018 DE 102018212636
(43) Veröffentlichungstag der Anmeldung: 05.02.2020
(73) Patentinhaber: Robert Bosch GmbH, 70442 Stuttgart (DE)
(72) Erfinder: Dackermann, Tim, 72072 Tuebingen (DE); Weinmann, Matthias, 72336 Balingen (DE); Baumgaertner, Daniel, 72070 Tuebingen (DE); Wienss, Andreas, 72800 Eningen Unter Achalm (DE)

(56) Entgegenhaltungen:
- EP-A1- 3 216 685
- WO-A1-2016/128789
- DE-A1-102016 225 489
- DE-A1-102018 109 272
- JP-A- H09 263 290
- JP-A- 2001 239 979
- KR-A- 20180 062 136
- US-A1- 2016 016 638

## Beschreibung

Die vorliegende Erfindung betrifft ein Regelverfahren zur Anpassung eines Fahrverhaltens eines Elektrofahrrads beim Schieben des Elektrofahrrads. Die Erfindung betrifft auch ein Steuergerät zur Durchführung des erfindungsgemäßen Regelverfahrens und das Elektrofahrrad mit diesem Steuergerät.

### Stand der Technik

Die gattungsgemäße DE 10 2016 218 374 B3 sowie die DE 10 2016 209 560 B3 offenbaren jeweils ein Verfahren und ein Steuergerät zur motorischen Unterstützung eines Nutzers beim Schieben eines Elektrofahrrads.

Durch eine aktivierte Schiebehilfe beziehungsweise einen aktivierten Schiebehilfebetriebsmodus eines Elektrofahrrads wird typischerweise ein Elektromotor des Elektrofahrrads zur Erzeugung einer konstanten Geschwindigkeit des Elektrofahrrads angesteuert. Ein Nutzer beziehungsweise Fahrer des Elektrofahrrads weist demgegenüber typischerweise eine um einen Mittelwert schwankende Schrittgeschwindigkeit auf. Folglich sind die Geschwindigkeit des Elektrofahrrads und die Schrittgeschwindigkeit des Nutzers häufig nicht gleich. Des Weiteren kann es beispielsweise in einer Gruppenfahrt mit einer Vielzahl an Elektrofahrrädern und insbesondere an Engstellen der Fahrtstrecke vorkommen, dass zur Vermeidung von Kollisionen zwischen den Elektrofahrrädern beziehungsweise zur Anpassung der Ego-Geschwindigkeit des Elektrofahrrads während des Schiebehilfebetriebsmodus die Schiebehilfe wiederholt an- und ausgeschaltet beziehungsweise aktiviert und deaktiviert wird. Das Zurückhalten oder das manuelle Schieben des Elektrofahrrades ist eine typische alternative Reaktion des Nutzers zum wiederholten An- und Abschalten der Schiebehilfe, wobei diese alternative Reaktion für den Nutzer kraftaufwändig ist.

Die Aufgabe der vorliegenden Erfindung ist es, eine Regelung eines Elektromotors im Schiebehilfebetrieb zu verbessern.

### Offenbarung der Erfindung

Die vorliegende Aufgabe wird gemäß der unabhängigen Ansprüche 1 und 9 gelöst.

Die vorliegende Erfindung betrifft ein Regelverfahren zur Anpassung eines Fahrverhaltens eines Elektrofahrrads beim Schieben des Elektrofahrrads. Das Regelverfahren weist eine Erkennung einer Aktivierung einer Schiebehilfe durch einen Nutzer auf. Vorteilhafterweise wird eine Betätigung eines Schalters zur Aktivierung der Schiebehilfe erkannt, wobei der Schalter beispielsweise an einem Lenker des Elektrofahrrads angeordnet ist. Anschließend wird in einem weiteren Schritt eine Ego-Geschwindigkeit des Elektrofahrrads erfasst. Die Erfassung erfolgt insbesondere mittels eines Geschwindigkeitssensors, welcher am Elektrofahrrad angeordnet ist, beispielsweise mittels eines Reed-Sensors. In einem weiteren Schritt wird eine Fremdgeschwindigkeit ermittelt, das heißt beispielsweise eine Schrittgeschwindigkeit des Nutzers beim Schieben des Elektrofahrrads. Alternativ oder zusätzlich wird als Fremdgeschwindigkeit wenigstens eine Geschwindigkeit eines Fremdfahrzeugs ermittelt, wobei sich das Fremdfahrzeug in einem Umgebungsnahbereich des Elektrofahrrads befindet, beispielsweise vor, hinter oder seitlich neben dem Elektrofahrrad. Der Umgebungsnahbereich des Elektrofahrrads weist beispielsweise einen Radius kleiner zehn Meter auf, besonders bevorzugt ist der Radius kleiner vier Meter. Anschließend wird in einem Verfahrensschritt ein Elektromotor des Elektrofahrrads in Abhängigkeit der erkannten Aktivierung der Schiebehilfe, der erfassten Ego-Geschwindigkeit und der ermittelten Fremdgeschwindigkeit zur Anpassung der Ego-Geschwindigkeit des Elektrofahrrads und/oder einer Beschleunigung des Elektrofahrrads geregelt. Das Verfahren weist den Vorteil auf, dass die Ego-Geschwindigkeit des Elektrofahrrads an die Schrittgeschwindigkeit des Nutzers und/oder die Geschwindigkeit wenigstens eines Fremdfahrzeugs angepasst wird, so dass der Schiebehilfebetriebsmodus für den Nutzer des Elektrofahrrads komfortabler wird beziehungsweise ein Risiko für Kollisionen beim Schieben erheblich reduziert wird.

In einer bevorzugten Ausführung wird vor der Ermittlung der Fremdgeschwindigkeit wenigstens ein Motorstrom des Elektromotors erfasst. Anschließend wird die Fremdgeschwindigkeit in Abhängigkeit des erfassten Motorstroms ermittelt. Diese Ausführung weist den Vorteil auf, dass die Kraft des Nutzers auf das Elektrofahrrad als Reaktion auf eine zu langsame oder zu schnelle Ego-Geschwindigkeit am Elektrofahrrad indirekt erfasst wird, da durch ein Zurückhalten oder manuelles Schieben der Motorstrom verändert wird. Des Weiteren sind in dieser Ausführung zur Ermittlung der Fremdgeschwindigkeit keine Funkverbindung zum Nutzer und/oder zum Fremdfahrzeug und/oder zusätzliche Sensoren notwendig.

In einer Weiterführung wird wenigstens ein Kamerabild mittels mindestens einer Kamera erfasst, wobei die Kamera insbesondere am Elektrofahrrad angeordnet ist. Ferner ist die Kamera vorteilhafterweise zur Erfassung von Kamerabildern mit ihrem Blickfeld in Längsrichtung des Elektrofahrrads nach vorne oder nach hinten ausgerichtet. Alternativ oder zusätzlich ist die Kamera mit ihrem Blickfeld zu einer Seite des Elektrofahrrads hin beziehungsweise in Richtung der Querachse des Elektrofahrrads ausgerichtet. Die Kamera kann als Weitwinkelkamera dazu eingerechtet sein, beispielsweise einen Umgebungsbereich des Elektrofahrrads in einem Blickwinkel von 135° zu erfassen. Vorteilhafterweise wird ferner eine Abfolge von Kamerabildern erfasst. Vorteilhafterweise ist die Kamera an einem Smartphone, welches am Lenker des Elektrofahrrades angeordnet ist, oder an einem Steuergerät des Elektrofahrrades angeordnet. Anschließend wird die Fremdgeschwindigkeit des Nutzers und/oder des Fremdfahrzeugs in Abhängigkeit des erfassten Kamerabildes ermittelt. Die Ermittlung der Fremdgeschwindigkeit erfolgt vorzugsweise in Abhängigkeit eines optischen Flusses zwischen mindestens zwei Kamerabildern der erfassten Abfolge von Kamerabildern und/oder in Abhängigkeit von dem im Kamerabild als Objekt erkannten Fremdfahrzeug und/oder dem als Objekt erkannten Nutzer und/oder in Abhängigkeit eines im Kamerabild erkannten Abstands zwischen dem Elektrofahrrad und dem Fremdfahrzeug. Diese Weiterführung weist den Vorteil auf, dass die Fremdgeschwindigkeit ohne eine Funkverbindung in Abhängigkeit der visuell erfassten Schrittgeschwindigkeit des Nutzers und/oder der visuell erfassten Fremdgeschwindigkeit des Fremdfahrzeugs erfasst wird.

In einer Ausgestaltung erfolgt die Ermittlung der Fremdgeschwindigkeit in Abhängigkeit einer mittels einer Funkverbindung empfangenen Sensorgröße, insbesondere wird die Sensorgröße mittels einer Bluetooth-Verbindung empfangen. Die Sensorgröße repräsentiert die Fremdgeschwindigkeit. Beispielsweise repräsentiert die Sensorgröße einen Beschleunigungs- oder Geschwindigkeitsverlauf des Nutzers oder des Fremdfahrzeugs, wobei die Sensorgröße mittels eines Sensors erfasst wird. Der Sensor ist vorzugsweise an dem Nutzer oder dem Fremdfahrzeug angeordnet, beispielsweise ist der Sensor ein Geschwindigkeitssensor des Fremdfahrzeugs. Durch diese Ausgestaltung entsteht der Vorteil, dass die Fremdgeschwindigkeit genau ermittelt werden kann.

Die Funkverbindung verbindet vorzugsweise ein Steuergerät des Elektrofahrrads mit einem Smartphone des Nutzers und/oder mit einem Steuergerät des Fremdfahrzeugs. Vorteilhafterweise ist der Sensor beispielsweise in einem Smartphone angeordnet, welches der Nutzer beispielsweise in einer Tasche mit sich führen kann, wobei das Smartphone des Nutzers mittels der Funkverbindung mit dem Steuergerät des Elektrofahrrads verbunden ist.

In einer besonders bevorzugten Ausführung wird die Ego-Geschwindigkeit des Elektrofahrrads durch die Regelung mit einer Verzögerung kleiner als fünf Sekunden nach einer Änderung der aktuellen Fremdgeschwindigkeit geregelt, insbesondere ist die Verzögerung kleiner als eine Sekunde. Beispielsweise resultiert daraus der Vorteil, dass die Ego-Geschwindigkeit schnell an die aktuelle Fremdgeschwindigkeit des Nutzers und/oder des Fremdfahrzeugs angepasst wird beziehungsweise, dass die Ego-Geschwindigkeit der Fremdgeschwindigkeit schnell folgt. Dadurch wird auch der Vorteil realisiert, dass im Falle eines Stopps eines beispielsweise vorausfahrenden Fremdfahrzeugs auch das Elektrofahrrad sofort stoppt.

Es kann in einer weiteren Ausgestaltung vorgesehen sein, dass eine Zielgeschwindigkeit in Abhängigkeit der erfassten Ego-Geschwindigkeit und/oder in Abhängigkeit der mindestens einen ermittelten Fremdgeschwindigkeit ermittelt wird. Als Zielgeschwindigkeit wird insbesondere ein Mittelwert eines Verlaufs der Fremdgeschwindigkeit oder ein Mittelwert mehrerer ermittelter Fremdgeschwindigkeiten oder eine langsamste mehrerer ermittelter Fremdgeschwindigkeiten ermittelt. Die Regelung des Elektromotors des Elektrofahrrads erfolgt in dieser Ausgestaltung zusätzlich in Abhängigkeit der ermittelten Zielgeschwindigkeit. Dadurch entsteht der Vorteil, dass die Regelung beispielsweise für den Nutzer stetig und vorhersehbar erfolgt.

In einer anderen Weiterführung wird in einem optionalen Schritt eine Position des Elektrofahrrads erfasst, insbesondere mittels eines globalen Navigationssatellitensystems. Anschließend wird eine Durchschnittsgeschwindigkeit oder eine empfohlene Ego-Geschwindigkeit im Schiebehilfebetrieb von einer Servereinrichtung in Abhängigkeit der Position des Elektrofahrrads empfangen. Der Empfang erfolgt insbesondere nach Absendung einer Anfrage an die Servervorrichtung zur Durchschnittsgeschwindigkeit oder der empfohlenen Ego-Geschwindigkeit in Abhängigkeit der erfassten Position. Danach erfolgt die Regelung des Elektromotors des Elektrofahrrads zusätzlich in Abhängigkeit der empfangenen Durchschnittsgeschwindigkeit oder der empfohlenen Ego-Geschwindigkeit. Dadurch entsteht der Vorteil, dass durch die Regelung für den Nutzer eine komfortable und sichere Ego-Geschwindigkeiten des Elektrofahrrads resultiert.

Die Erfindung betrifft auch ein Steuergerät zur Durchführung des erfindungsgemäßen Regelverfahrens. Es kann vorteilhafterweise vorgesehen sein, dass das Steuergerät ein Smartphone ist.

Die Erfindung betrifft auch ein Elektrofahrrad mit dem Steuergerät.

Weitere Vorteile ergeben sich aus der nachfolgenden Beschreibung von Ausführungsbeispielen mit Bezug zu den Figuren.
Figur 1: Elektrofahrrad
Figur 2: Nutzer beim Schieben mit Elektrofahrrad
Figur 3: zwei Elektrofahrräder beim Schieben
Figur 4: Ablaufdiagramm des Regelverfahrens als Blockschaltbild
Figur 5: Steuergerät
Figur 6: Diagramm des Fremdgeschwindigkeits- und Ego-Geschwindigkeitsverlaufs
Figur 7: Alternativer Fremdgeschwindigkeits- und Ego-Geschwindigkeitsverlauf
Figur 8: Weiterer Fremdgeschwindigkeits- und Ego-Geschwindigkeitsverlauf

### Ausführungsbeispiele

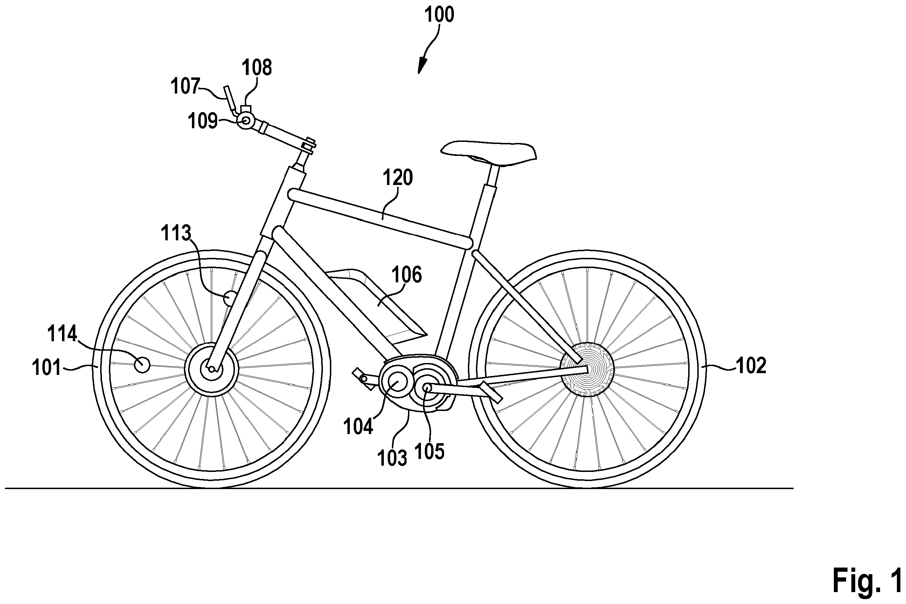

In Figur 1 ist ein Elektrofahrrad 100 in seitlicher Ansicht dargestellt. Das Elektrofahrrad 100 weist ein Vorderrad 101 und ein Hinterrad 102 sowie einen Rahmen 120 auf. An dem Elektrofahrrad 100 ist ferner im Bereich einer Tretachse 105 eine Antriebseinheit 103 mit einem Elektromotor 104 und einem Getriebe angeordnet, wobei die Tretachse 105 durch einen Nutzer mittels zweier Pedale zur Erzeugung eines manuellen Drehmomentes angetrieben werden kann. Der Elektromotor 104 der Antriebseinheit 103 ist dazu eingerichtet, zusätzlich zum manuellen Drehmoment des Nutzers ein motorisches Drehmoment zu erzeugen und auf ein Hinterrad des Elektrofahrrads 100 zu übertragen. Die Antriebseinheit 103 wird dazu mittels eines Batteriemoduls 106 mit Energie versorgt. Ein Steuergerät 107 und/oder ein Smartphone ist dazu eingerichtet, den Elektromotor 104 anzusteuern beziehungsweise zu regeln. Um einen Schiebehilfe-Betriebsmodus zu aktivieren, kann der Nutzer einen Schalter 108 betätigen. Der Schalter 108 ist beispielsweise am Lenker 109 des Elektrofahrrads 100 angeordnet. Alternativ kann das Steuergerät 107 und/oder das Smartphone den Schalter 108 aufweisen, beispielsweise ist der Schalter 108 als Touchscreen-Funktion realisiert. Des Weiteren weist das Elektrofahrrad 100 einen Geschwindigkeitssensor 113 auf, welcher beispielsweise an einer Lenkergabel des Elektrofahrrads 100 angeordnet und mittels eines Magneten 114 dazu eingerichtet ist, eine Drehzahl des Vorderrads 101 beziehungsweise eine Ego-Geschwindigkeit des Elektrofahrrads 100 zu erfassen.

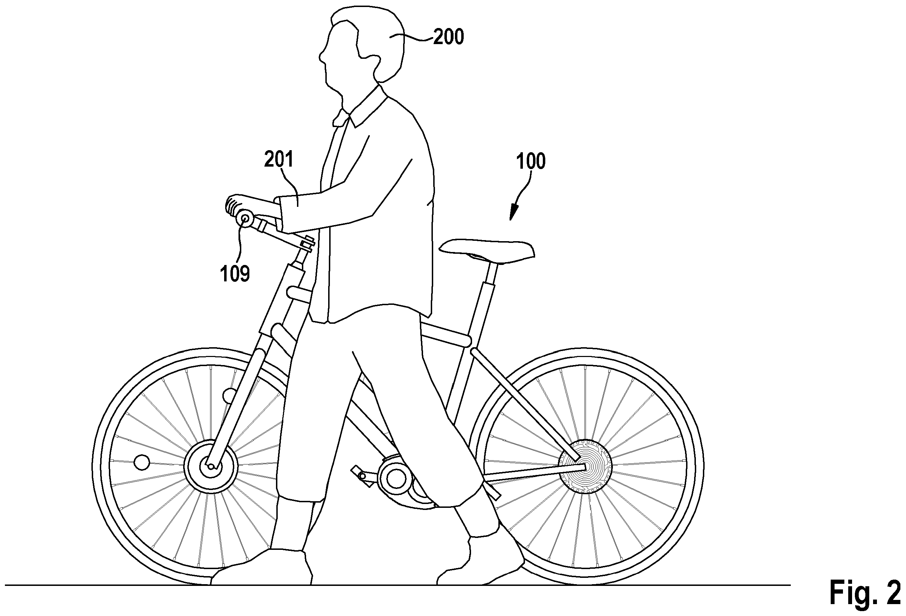

In Figur 2 ist ein Fahrer beziehungsweise Nutzer 200 beim Schieben des Elektrofahrrads 100 dargestellt. Typischerweise hält der Nutzer 200 beim Schieben den Lenker 109 des Elektrofahrrads 100 mit seinen Armen 201 fest und führt somit das Elektrofahrrad 100 beim Schieben gemäß einer von ihm gewünschten Lenkrichtung. Durch Aktivierung des Schiebehilfe-Betriebsmodus, beispielsweise durch Betätigung des Schalters 108, wird der Elektromotor 104 angesteuert beziehungsweise geregelt, so dass das Elektrofahrrad 100 zusätzlich zur manuellen Schiebekraft des Nutzers 200 mittels des Elektromotors 104 ein motorisches Drehmoment erzeugt. Die Schrittgeschwindigkeit des Nutzers 200 und die Ego-Geschwindigkeit des Elektrofahrrads 100 können dabei ohne das erfindungsgemäße Regelungsverfahren voneinander abweichen, wobei der Nutzer 200 zur Anpassung der Ego-Geschwindigkeit des Elektrofahrrads 100 und/oder der Beschleunigung des Elektrofahrrads 100 die Schiebehilfe mehrfach an- und ausschalten kann. Im erfindungsgemäßen Regelungsverfahren wird durch eine Regelung des Elektromotors 104 vorteilhafterweise die Ego-Geschwindigkeit v_{ego} an die Schrittgeschwindigkeit des Nutzers 200 als Fremdgeschwindigkeit v_{fremd} ohne mehrfaches Aktivieren und Deaktivieren der Schiebehilfe angepasst, so dass das Schieben des Elektrofahrrads 100 im Schiebehilfebetriebsmodus für den Nutzer 200 komfortabler wird.

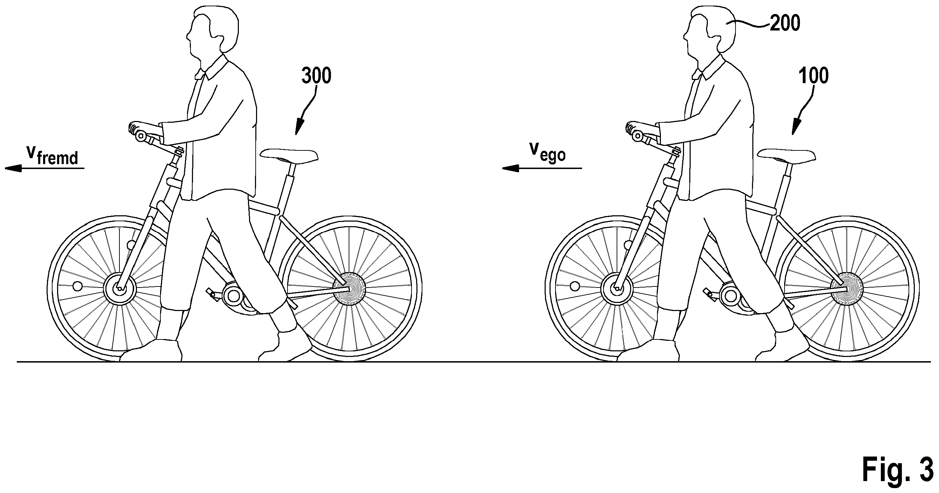

In Figur 3 sind das Elektrofahrrad 100 und ein Fremdfahrzeug 300 dargestellt, wobei das Fremdfahrzeug 300 in diesem Beispiel ebenfalls ein Elektrofahrrad ist. Das Elektrofahrrad 100 wird durch einen Nutzer 200 geschoben. Das Fremdfahrzeug 300 weist ein Steuergerät 301 auf und wird in diesem Beispiel ebenfalls geschoben, wobei das Fremdfahrzeug 300 zur Durchführung des erfindungsgemäßen Regelverfahrens alternativ auch im Normalbetrieb fahren könnte. Das Elektrofahrrad 100 weist eine Ego-Geschwindigkeit v_{ego} und das Fremdfahrzeug 300 weist eine Fremdgeschwindigkeit v_{fremd} auf. Durch Regelung des Elektromotors 104 des Elektrofahrrads 100 im erfindungsgemäßen Regelungsverfahren können die Ego-Geschwindigkeit v_{ego} und die Fremdgeschwindigkeit v_{fremd} vorteilhafterweise aneinander angepasst werden, so dass beispielsweise ein Risiko einer Kollision zwischen dem Elektrofahrrad 100 und dem Fremdfahrzeug 300 reduziert wird.

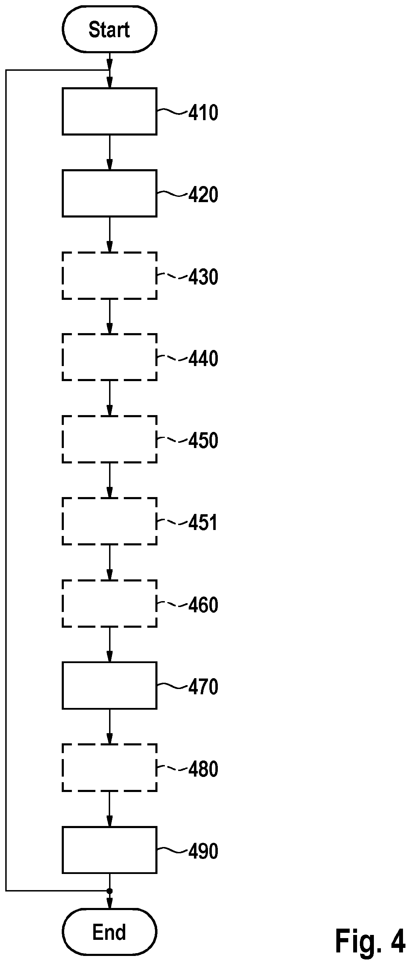

In Figur 4 ist ein Ablaufdiagramm des erfindungsgemäßen Regelverfahrens als Blockschaltbild dargestellt. Zunächst wird im Schritt 410 die Aktivierung des Schiebehilfebetriebsmodus des Elektrofahrrads 100 durch den Nutzer 200 erkannt. Die Erkennung 410 erfolgt vorzugsweise durch die Erfassung der Betätigung des Schalters 108 beziehungsweise einer Eingabe durch den Nutzer 200. Im Schritt 420 wird die Ego-Geschwindigkeit v_{ego} des Elektrofahrrads 100 mittels beispielsweise des Geschwindigkeitssensors 113 erfasst. Die Ego-Geschwindigkeit v_{ego} kann alternativ oder zusätzlich mittels weiteren Sensoren, welche auf anderen Technologien basieren, beispielsweise mittels eines Radarsensors, erfasst werden. Es kann optional im Schritt 430 vorgesehen sein, wenigstens einen Motorstrom des Elektromotors 104 des Elektrofahrrads 100 zu erfassen. Zusätzlich oder alternativ kann in einem weiteren optionalen Schritt 440 wenigstens ein Kamerabild mittels einer Kamera erfasst werden. Des Weiteren erfolgt optional eine Erfassung 450 einer Position des Elektrofahrrads 100 und ein Empfangen 451 einer Durchschnittsgeschwindigkeit oder einer empfohlenen Ego-Geschwindigkeit von einer Servereinrichtung in Abhängigkeit der erfassten Position des Elektrofahrrads 100. Es kann in einem weiteren optionalen Schritt 460 vorgesehen sein, eine Sensorgröße beziehungsweise einen Sensorgrößenverlauf mittels einer Funkverbindung von dem Nutzer 200 oder dem Fremdfahrzeug 300 zu empfangen. Die Funkverbindung verbindet beispielsweise ein Steuergerät 107 des Elektrofahrrads 100 mit einem Smartphone des Nutzers 200 und/oder mit einem Steuergerät 301 des Fremdfahrzeugs 300. Anschließend wird im Schritt 470 die Fremdgeschwindigkeit v_{fremd} des Nutzers 200, d.h. die Schrittgeschwindigkeit des Nutzers 200, und/oder die Fremdgeschwindigkeit v_{fremd} wenigstens eines Fremdfahrzeugs 300 ermittelt. Die Ermittlung 470 der Fremdgeschwindigkeit v_{fremd} erfolgt optional in Abhängigkeit des erfassten Motorstroms und/oder des erfassten Kamerabildes. Die Ermittlung 470 der Fremdgeschwindigkeit v_{fremd} kann optional auch in Abhängigkeit der empfangenen Sensorgröße erfolgen. Anschließend kann es im optionalen Schritt 480 vorgesehen sein, eine Zielgeschwindigkeit in Abhängigkeit der erfassten Ego-Geschwindigkeit v_{ego} und/oder der mindestens einen ermittelten Fremdgeschwindigkeit v_{fremd} zu ermitteln. Danach erfolgt die Regelung 490 des Elektromotors 104 des Elektrofahrrads 100 in Abhängigkeit der erkannten Aktivierung des Schiebehilfebetriebsmodus, der erfassten Ego-Geschwindigkeit v_{ego} und der ermittelten Fremdgeschwindigkeit v_{fremd}. Die Regelung 490 passt das Fahrverhalten des Elektrofahrrads 100 beziehungsweise die Ego-Geschwindigkeit v_{ego} und/oder eine Beschleunigung a des Elektrofahrrads 100 an, wodurch die Regelung die Ego-Geschwindigkeit v_{ego} beispielsweise an die Fremdgeschwindigkeit v_{fremd} angepasst wird. Die Regelung 490 wird optional zusätzlich in Abhängigkeit der empfangenen Durchschnittsgeschwindigkeit oder der empfohlenen Ego-Geschwindigkeit durchgeführt. Die Regelung 490 des Elektromotors 104 wird ferner optional zusätzlich in Abhängigkeit der ermittelten Zielgeschwindigkeit durchgeführt. Vorteilhafterweise erfolgt die Regelung 490 des Elektromotors 104 sofort beziehungsweise mit einer kleinen Verzögerung nach einer Änderung der aktuellen Fremdgeschwindigkeit v_{fremd}, beispielsweise nach einer Verzögerung kleiner als fünf Sekunden.

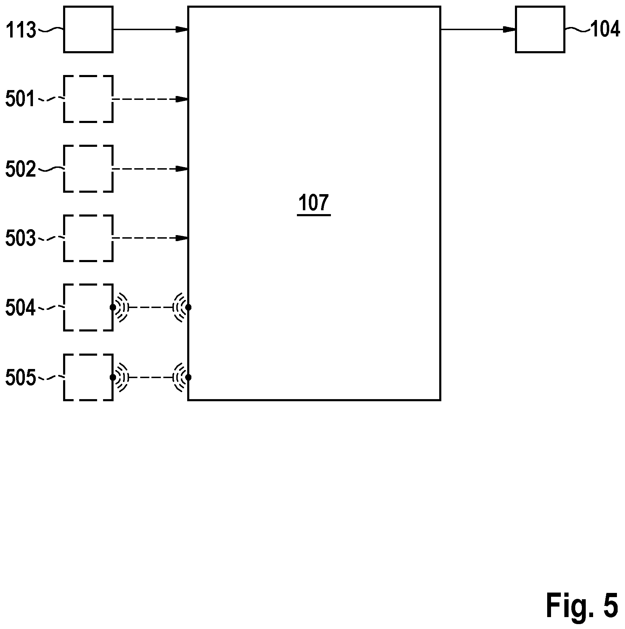

In Figur 5 ist das Steuergerät 107 des Elektrofahrrads 100 dargestellt. Das Steuergerät 107 ist beispielsweise am Lenker 109 des Elektrofahrrads 100 angeordnet und dazu eingerichtet, den Elektromotor 104 anzusteuern beziehungsweise zu regeln. Das Steuergerät 107 erfasst dazu eine Ego-Geschwindigkeit v_{ego} mittels des Geschwindigkeitssensors 113. Optional erfasst das Steuergerät 107 ein Kamerabild mittels der Kamera 501, welche beispielsweise am Steuergerät 107 angeordnet ist, und/oder eine Stromgröße eines Stromsensors 502, wobei die Stromgröße den Motorstrom des Elektromotors 104 repräsentiert. Ferner kann das Steuergerät 107 die Position des Elektrofahrrads 100 mittels eines Positionssensors 503 erfassen, beispielsweise mittels eines GPS-Sensors. Mittels einer Empfangseinheit 504, insbesondere für Mobilfunk oder WLAN, ist das Steuergerät 107 dazu eingerichtet, die Durchschnittsgeschwindigkeit oder die empfohlenen Ego-Geschwindigkeit von einer Servereinrichtung in Abhängigkeit der erfassten Position des Elektrofahrrads 100 zu empfangen. Das Steuergerät 107 ist des Weiteren optional dazu eingerichtet, eine Sensorgröße beziehungsweise einen Sensorgrößenverlauf mittels einer Funkverbindung 505 von einem Smartphone des Nutzers 200 oder von dem Fremdfahrzeug 300, beispielsweise von einer Sendevorrichtung des Steuergeräts 301 des Fremdfahrzeugs 300, zu empfangen. Die Funkverbindung 505 verbindet das Steuergerät 107 des Elektrofahrrads 100 mit dem Smartphone des Nutzers 200 und/oder mit einem Steuergerät 301 des Fremdfahrzeugs 300.

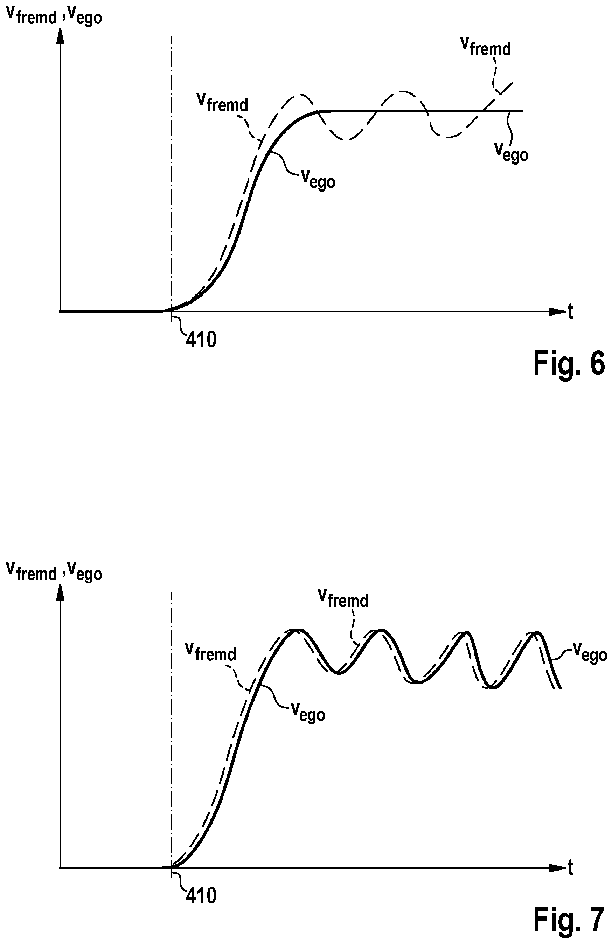

In Figur 6 ist ein Diagramm eines möglichen durch die Regelung 490 resultierenden Ego-Geschwindigkeitsverlaufs dargestellt. Der gestichelt dargestellte Fremdgeschwindigkeitsverlauf entspricht in diesem Ausführungsbeispiel der variierenden Schrittgeschwindigkeit eines Nutzers 200 beim Schieben des Elektrofahrrads 100. Die ermittelte Fremdgeschwindigkeit v_{fremd} schwankt in diesem Ausführungsbeispiel sinusförmig um einen Mittelwert. Im Schritt 480 wird als Zielgeschwindigkeit der Mittelwert des Fremdgeschwindigkeitsverlaufs bestimmt. Als Ego-Geschwindigkeit v_{ego} des Elektrofahrrads 100 resultiert durch die Regelung 490 in Abhängigkeit der Zielgeschwindigkeit beispielsweise die gemittelte Fremdgeschwindigkeit v_{fremd}. Dieses Regelkonzept wird vorteilhafterweise zur Anpassung der Ego-Geschwindigkeit v_{ego} an die Schrittgeschwindigkeit des Nutzers 200 eingestellt. Beispielsweis erfolgt bei einer im Schritt 470 ermittelten sinusförmig um 4 km/h schwankenden Schrittgeschwindigkeit eines Nutzers 200 die Regelung 490 auf eine Ego-Geschwindigkeit von 4 km/h.

In Figur 7 ist ein alternativer Ego-Geschwindigkeitsverlauf dargestellt, wobei dieser durch die Regelung 490 mit einer anderen Regelstrategie resultiert. In diesem Beispiel folgt aufgrund der Regelung 490 die Ego-Geschwindigkeit v_{ego} mit kurzer Verzögerung der Fremdgeschwindigkeit v_{fremd}, wobei die Verzögerung vorteilhafterwiese für den Nutzer 200 kaum wahrnehmbar ist. Diese Regelstrategie wird vorteilhafterweise zur Anpassung der Ego-Geschwindigkeit v_{ego} an die Fremdgeschwindigkeit v_{fremd} des Nutzers 200, d.h. die Schrittgeschwindigkeit, und/oder die Fremdgeschwindigkeit v_{fremd} eines Fremdfahrzeuges 300 eingestellt. Durch das in Figur 7 dargestellte Regelkonzept wird die Ego-Geschwindigkeit v_{ego} sofort an eine sich verändernde Fremdgeschwindigkeit v_{fremd} eines Nutzers 200 und/oder eines Fremdfahrzeugs 300 angepasst, so dass beispielsweise durch die Regelung 490 ein automatisches Abstoppen des Elektrofahrrads 100 nach einem erkannten Stopp eines vorausfahrenden Fremdfahrzeugs 300 erfolgt.

Die in Figur 6 und Figur 7 dargestellten Regelstrategien des Regelverfahrens werden vorteilhafterweise kombiniert beziehungsweise überlagert. Letzteres ist insbesondere möglich, da Änderungen der Schrittgeschwindigkeit des Nutzers 200 und Änderungen der Fremdgeschwindigkeit v_{fremd} des Fremdfahrzeuges 300 beispielsweise mit verschiedenen Frequenzen beziehungsweise Zeitabständen ermittelt werden.

## Patentansprüche

1. Regelverfahren zur Anpassung eines Fahrverhaltens eines Elektrofahrrads (100) beim Schieben des Elektrofahrrads (100), wenigstens umfassend der folgenden Schritte
• Erkennung (410) einer Aktivierung eines Schiebehilfebetriebsmodus des Elektrofahrrads (100) durch einen Nutzer,
• Erfassung (420) einer Ego-Geschwindigkeit (v_{ego}) des Elektrofahrrads (100), **gekennzeichnet durch** die folgenden Schritte:
• Ermittlung (470) einer Fremdgeschwindigkeit (v_{fremd}) des Nutzers (200) und/oder wenigstens eines Fremdfahrzeugs (300), und
• Regelung (490) eines Elektromotors (104) des Elektrofahrrads (100) in Abhängigkeit der erkannten Aktivierung des Schiebehilfebetriebsmodus, der erfassten Ego-Geschwindigkeit (v_{ego}) und der ermittelten Fremdgeschwindigkeit (v_{fremd}) zur Anpassung der Ego-Geschwindigkeit (v_{ego}) und/oder einer Beschleunigung (a) des Elektrofahrrads (100).

2. Regelverfahren nach Anspruch 1, **dadurch gekennzeichnet, dass** die folgenden Schritte durchgeführt werden
• Erfassung (430) wenigstens eines Motorstroms des Elektromotors (104), und
• Ermittlung (470) der Fremdgeschwindigkeit (v_{fremd}) in Abhängigkeit des erfassten Motorstroms.

3. Regelverfahren nach einem der vorhergehenden Ansprüche, **dadurch gekennzeichnet, dass** die folgenden Schritte durchgeführt werden
• Erfassung (440) wenigstens eines Kamerabildes mittels einer Kamera, und
• Ermittlung (470) der Fremdgeschwindigkeit (v_{fremd}) in Abhängigkeit des erfassten Kamerabildes.

4. Regelverfahren nach einem der vorhergehenden Ansprüche, **dadurch gekennzeichnet, dass** die folgenden Schritte durchgeführt werden
• Empfang (460) wenigstens einer Sensorgröße mittels einer Funkverbindung, wobei die Sensorgröße die Fremdgeschwindigkeit (v_{fremd}) repräsentiert, und
• Ermittlung (470) der Fremdgeschwindigkeit (v_{fremd}) in Abhängigkeit der empfangenen Sensorgröße.

5. Regelverfahren nach Anspruch 4, **dadurch gekennzeichnet, dass** die Funkverbindung ein Steuergerät (107) des Elektrofahrrads (100) mit einem Smartphone des Nutzers (200) und/oder mit einem Steuergerät des Fremdfahrzeugs (300) verbindet.

6. Regelverfahren nach einem der vorhergehenden Ansprüche, **dadurch gekennzeichnet, dass** durch die Regelung (490) des Elektromotors (104) die Ego-Geschwindigkeit (v_{ego}) mit einer Verzögerung kleiner als fünf Sekunden nach einer Änderung der aktuellen Fremdgeschwindigkeit (v_{fremd}) geregelt wird, insbesondere ist die Verzögerung kleiner als eine Sekunde.

7. Regelverfahren nach einem der vorhergehenden Ansprüche, **dadurch gekennzeichnet, dass** die folgenden Schritte durchgeführt werden
• Ermittlung (480) einer Zielgeschwindigkeit in Abhängigkeit der erfassten Ego-Geschwindigkeit (v_{ego}) und/oder der mindestens einen ermittelten Fremdgeschwindigkeit (v_{fremd}), wobei als Zielgeschwindigkeit insbesondere ein Mittelwert der Fremdgeschwindigkeit (v_{fremd}) ermittelt wird, und
• Regelung (490) des Elektromotors (104) zusätzlich in Abhängigkeit der ermittelten Zielgeschwindigkeit.

8. Regelverfahren nach einem der vorhergehenden Ansprüche, **dadurch gekennzeichnet, dass** die folgenden Schritte durchgeführt werden
• Erfassung (450) einer Position des Elektrofahrrads,
• Empfangen (451) einer Durchschnittsgeschwindigkeit im Schiebehilfebetrieb oder einer empfohlenen Ego-Geschwindigkeit im Schiebehilfebetrieb von einer Servereinrichtung in Abhängigkeit der erfassten Position des Elektrofahrrads, und
• Regelung (490) des Elektromotors (104) zusätzlich in Abhängigkeit der empfangenen Durchschnittsgeschwindigkeit oder der empfohlenen Ego-Geschwindigkeit.

9. Steuergerät (107), wobei das Steuergerät (107) dazu eingerichtet ist,
• eine Aktivierung eines Schiebehilfebetriebsmodus eines Elektrofahrrads (100) durch eine Erfassung einer Betätigung eines Schalters (108) zu erkennen,
• eine Ego-Geschwindigkeit (v_{ego}) mittels eines
Geschwindigkeitssensors (113) zu erfassen, **dadurch gekennzeichnet, dass** das Steuergerät (107) eingerichtet ist:
• eine Fremdgeschwindigkeit v_{fremd} des Nutzers (200) und/oder eine Fremdgeschwindigkeit (v_{fremd}) wenigstens eines Fremdfahrzeugs (300) zu ermitteln, und
• einen Elektromotor (104) in Abhängigkeit der erkannten Aktivierung des Schiebehilfebetriebsmodus, der erfassten Ego-Geschwindigkeit (v_{ego}) und der ermittelten Fremdgeschwindigkeit (v_{fremd}) zu regeln.

10. Elektrofahrrad (100) mit einem Steuergerät (107) nach Anspruch 9.

## Claims

1. Control method for adjusting a driving behaviour of an electric bicycle (100) when pushing the electric bicycle (100), at least comprising the following steps
• identifying (410) activation of a pushing assistance operating mode of the electric bicycle (100) by a user,
• detecting (420) an ego speed (v_{ego}) of the electric bicycle (100), **characterized by** the following steps:
• ascertaining (470) an external speed (vₑₓₜₑᵣₙₐₗ) of the user (200) and/or at least one other vehicle (300), and
• controlling (490) an electric motor (104) of the electric bicycle (100) depending on the identified activation of the pushing assistance operating mode, the detected ego speed (v_{ego}) and the ascertained external speed (vₑₓₜₑᵣₙₐₗ) for adjusting the ego speed (v_{ego}) and/or an acceleration (a) of the electric bicycle (100).

2. Control method according to Claim 1, **characterized in that** the following steps are carried out
• detecting (430) at least one motor current of the electric motor (104), and
• ascertaining (470) the external speed (vₑₓₜₑᵣₙₐₗ) depending on the detected motor current.

3. Control method according to either of the preceding claims, **characterized in that** the following steps are carried out
• recording (440) at least one camera image by means of a camera, and
• ascertaining (470) the external speed (vₑₓₜₑᵣₙₐₗ) depending on the recorded camera image.

4. Control method according to one of the preceding claims, **characterized in that** the following steps are carried out
• receiving (460) at least one sensor variable by means of a radio link, wherein the sensor variable represents the external speed (vₑₓₜₑᵣₙₐₗ), and
• ascertaining (470) the external speed (vₑₓₜₑᵣₙₐₗ) depending on the received sensor variable.

5. Control method according to Claim 4, **characterized in that** the radio link connects a controller (107) of the electric bicycle (100) to a smartphone of the user (200) and/or to a controller of the other vehicle (300).

6. Control method according to one of the preceding claims, **characterized in that**, by controlling (490) the electric motor (104), the ego speed (v_{ego}) is controlled with a delay of less than five seconds following a change in the current external speed (vₑₓₜₑᵣₙₐₗ), in particular the delay is less than one second.

7. Control method according to one of the preceding claims, **characterized in that** the following steps are carried out
• ascertaining (480) a target speed depending on the detected ego speed (v_{ego}) and/or the at least one ascertained external speed (vₑₓₜₑᵣₙₐₗ), wherein in particular an average value of the external speed (vₑₓₜₑᵣₙₐₗ) is ascertained as the target speed, and
• controlling (490) the electric motor (104) additionally depending on the ascertained target speed.

8. Control method according to one of the preceding claims, **characterized in that** the following steps are carried out
• detecting (450) a position of the electric bicycle,
• receiving (451) an average speed during pushing assistance operation or a recommended ego speed during pushing assistance operation from a server device depending on the detected position of the electric bicycle, and
• controlling (490) the electric motor (104) additionally depending on the received average speed or the recommended ego speed.

9. Controller (107), wherein the controller (107) is designed
• to identify activation of a pushing assistance operating mode of an electric bicycle (100) by detecting operation of a switch (108),
• to detect an ego speed (v_{ego}) by means of a speed sensor (113), **characterized in that** the controller (107) is designed:
• to ascertain an external speed (vₑₓₜₑᵣₙₐₗ) of the user (200) and/or an external speed (vₑₓₜₑᵣₙₐₗ) of at least one other vehicle (300), and
• to control an electric motor (104) depending on the identified activation of the pushing assistance operating mode, the detected ego speed (v_{ego}) and the ascertained external speed (vₑₓₜₑᵣₙₐₗ).

10. Electric bicycle (100) comprising a controller (107) according to Claim 9.

## Revendications

1. Procédé de régulation permettant d'adapter un comportement de conduite d'une bicyclette électrique (100) lorsqu'on pousse la bicyclette électrique (100), comprenant au moins les étapes suivantes
• la reconnaissance (410) d'une activation d'un mode d'aide à la poussée de la bicyclette électrique (100) par un utilisateur,
• la détection (420) d'une vitesse propre (v_{ego}) de la bicyclette électrique (100),
**caractérisé par** les étapes suivantes :
• l'établissement (470) d'une vitesse extérieure (v_{fremd}) de l'utilisateur (200) et/ou d'au moins un véhicule extérieur (300), et
• la régulation (490) d'un moteur électrique (104) de la bicyclette électrique (100) en fonction de l'activation reconnue du mode d'assistance à la poussée, de la vitesse propre (v_{ego}) détectée et de la vitesse extérieure (v_{fremd}) établie pour adapter la vitesse propre (v_{ego}) et/ou une accélération (a) de la bicyclette électrique (100).

2. Procédé de régulation selon la revendication 1, **caractérisé en ce que** les étapes suivantes sont effectuées
• la détection (430) d'au moins un courant de moteur du moteur électrique (104), et
• l'établissement (470) de la vitesse extérieure (v_{fremd}) en fonction du courant de moteur détecté.

3. Procédé de régulation selon l'une quelconque des revendications précédentes, **caractérisé en ce que** les étapes suivantes sont effectuées
• la détection (440) d'au moins une image de caméra au moyen d'une caméra, et
• l'établissement (470) de la vitesse extérieure (v_{fremd}) en fonction de l'image de caméra détectée.

4. Procédé de régulation selon l'une quelconque des revendications précédentes, **caractérisé en ce que** les étapes suivantes sont effectuées
• la réception (460) d'au moins une grandeur de capteur au moyen d'une liaison radio, la grandeur de capteur représentant la vitesse extérieure (v_{fremd}), et
• l'établissement (470) de la vitesse extérieure (v_{fremd}) en fonction de la grandeur de capteur reçue.

5. Procédé de régulation selon la revendication 4, **caractérisé en ce que** la liaison radio relie un appareil de commande (107) de la bicyclette électrique (100) à un smartphone de l'utilisateur (200) et/ou à un appareil de commande du véhicule extérieur (300).

6. Procédé de régulation selon l'une quelconque des revendications précédentes, **caractérisé en ce que** la régulation (490) du moteur électrique (104) régule la vitesse propre (v_{ego}) avec une temporisation inférieure à cinq secondes après une variation de la vitesse extérieure (v_{fremd}) actuelle, la temporisation étant en particulier inférieure à une seconde.

7. Procédé de régulation selon l'une quelconque des revendications précédentes, **caractérisé en ce que** les étapes suivantes sont effectuées
• l'établissement (480) d'une vitesse cible en fonction de la vitesse propre (v_{ego}) détectée et/ou de ladite au moins une vitesse extérieure (v_{fremd}) établie, dans lequel en particulier une moyenne de la vitesse extérieure (v_{fremd}) est établie en tant que vitesse cible, et
• la régulation (490) du moteur électrique (104) en outre en fonction de la vitesse cible établie.

8. Procédé de régulation selon l'une quelconque des revendications précédentes, **caractérisé en ce que** les étapes suivantes sont effectuées
• la détection (450) d'une position de la bicyclette électrique,
• la réception (451) d'un dispositif serveur d'une vitesse moyenne en mode d'assistance à la poussée ou d'une vitesse propre recommandée en mode d'assistance à la poussée en fonction de la position détectée de la bicyclette électrique, et
• la régulation (490) du moteur électrique (104) en outre en fonction de la vitesse moyenne reçue ou de la vitesse propre recommandée.

9. Appareil de commande (107), l'appareil de commande (107) étant aménagé pour
• reconnaître une activation d'un mode d'aide à la poussée d'une bicyclette électrique (100) par une détection d'un actionnement d'un commutateur (108),
• détecter une vitesse propre (v_{ego}) au moyen d'un capteur de vitesse (113),
**caractérisé en ce que** l'appareil de commande (107) est aménagé pour :
• établir une vitesse extérieure (v_{fremd}) de l'utilisateur (200) et/ou une vitesse extérieure (v_{fremd}) d'au moins un véhicule extérieur (300), et
• réguler un moteur électrique (104) en fonction de l'activation reconnue du mode d'assistance à la poussée, de la vitesse propre (v_{ego}) détectée et de la vitesse extérieure (v_{fremd}) établie.

10. Bicyclette électrique (100) comprenant un appareil de commande (107) selon la revendication 9.
